# FASCICULE DE BREVET EUROPEEN

(11) **EP 0 429 455 B1**
(45) Date de publication et mention de la délivrance du brevet: **03.11.1993**
(21) Numéro de dépôt: 89904090.1
(22) Date de dépôt: 24.03.1989
(51) Int. Cl.: F16F 7/12, F42C 1/02

(54) **DISPOSITIF ABSORBEUR DE CHOC**
STOSSENERGIEABSORBER
SHOCK ABSORBER DEVICE

(30) Priorité: 25.03.1988 FR 8804127
(43) Date de publication de la demande: 05.06.1991
(73) Titulaire: SICMA AERO SEAT - SOCIETE INDUSTRIELLE ET COMMERCIALE DE MATERIEL AERONAUTIQUE, F-75116 Paris (FR)
(72) Inventeur: DANNAWI, Marwan, F-44240 La Chapelle-sur-Erdre (FR)
(74) Mandataire: Derambure, Christian
(86) Numéro de dépôt international: FR8900140
(87) Numéro de publication internationale: WO8909349

(56) Documents cités:
- FR-A- 1 586 115
- US-A- 3 945 662

## Description

La présente invention concerne un dispositif absorbeur de choc et plus particulièrement un dispositif qui absorbe et/ou atténue l'énergie d'une façon qui est programmée à l'avance, selon l'objet à protéger et les conditions de l'application du choc, lesquelles conditions sont connues.

Le dispositif d'absorption d'énergie selon l'invention présente des caractéristiques originales qui permettent, grâce à une méthode de calcul appropriée dont les principes sont ceux de la mécanique des solides, de programmer sa déformation de façon à lui faire jouer pleinement son rôle d'un bout à l'autre du choc, sans dommage pour l'objet protégé. Le dispositif d'absorption d'énergie selon l'invention est en fait un véritable programmeur de choc.

Il existe des systèmes d'absorption d'énergie utilisés de façon courante pour préserver des vies humaines et le matériel lors de crashes de voitures par exemple, de chutes d'ascenseur, ou encore lors de déflagration dans les centrales nucléaires. Des sections à parois minces fermées en oméga ou rectangulaires, ont également été utilisées pour l'absorption d'énergie sur les structures des automobiles, les trains et les bus par exemple.

Des dispositifs de ce genre sont décrits par exemple dans le document US-A-3 945 662 ayant servi à delimiter la revendication 1 et dans le document FR-A-1 586 115, pour des applications liées à l'automobile. Le premier document par exemple concerne un élément associé à une colonne de direction qui permet d'absorber l'énergie liée à un choc. Ce dispositif absorbeur consiste en un élément cylindrique comportant deux embases reliées par des bras allongés. Cet élément est destiné à être enrobé de résine synthétique.

Cet absorbeur comprend donc deux parties : une partie métallique et une partie synthétique. L'ensemble est conçu pour atténuer un choc et permettre une déformation.

Le document FR-A-619 247 concerne une fusée percutante dans laquelle il n'y a pas uniquement déformation des bras comme cela est le cas dans la présente invention.

Le document US-A-3 945 662 concerne un absorbeur de choc dans lequel le nombre de bras est bien supérieur à cinq et dans lequel il est prévu de remplir les fenêtres de l'absorbeur de résine synthétique. Le flambage résultant de cet absorbeur est plutôt un flambage non symétrique.

Le document FR-A-1 586 115 concerne lui aussi un dispositif absorbeur d'énergie constitué de plusieurs barrettes reliant le moyeu du volant d'un véhicule, à la colonne de direction. Ce dispositif a pour but de se déformer au mieux lors d'un choc pour éviter toute meurtrissure du conducteur.

Ces systèmes d'absorption d'énergie peuvent être constitués de simples poutres soumises au flambage ou encore constitués d'un empilement de corps creux. L'absorption d'énergie résulte de la déformation des systèmes utilises ; cette déformation étant une déformation par compression.

De tels systèmes sont par exemple décrits dans les documents FR-A-1 541 956 et 2 284 801 où l'atténuation du choc est obtenue par la fermeture successive d'orifices régulièrement répartis. Cette atténuation est réalisée essentiellement par compression.

Un autre document FR-A-619 247 montre un organe disposé à l'extrémité d'une fusée percutante de bombe dont le rôle est double : permettre l'accrochage de la bombe et procurer une certaine sécurité par un retard à la percussion.

Cet organe est en forme d'anneau et, lors d'un contact avec le sol, il permet de réduire la vitesse du percuteur.

Cependant, la plupart de ces systèmes d'absorption d'énergie ne répondent pas à une loi de comportement pré-établie : l'utilisation de ces systèmes repose essentiellement sur des données empiriques.

La présente invention a pour but de proposer un dispositif absorbeur de choc dont le comportement répond à une loi pré-établie grâce à une structure particulière, originale, susceptible de déformation par flambage plastique dynamique. Par ce dispositif et pendant la durée totale du choc, on maîtrise la force subie par l'objet ou la personne a protéger.

Le dispositif d'absorption d'énergie selon l'invention constitue un véritable programmeur de choc dont le prix de revient est peu élevé : ce dispositif présente par ailleurs l'avantage de se dispenser de toute vérification et entretien après installation.

Le dispositif absorbeur de choc selon l'invention peut être constitué d'un bloc de matériau métallique compacté ou non, comportant deux embases ou semelles de réception du choc et, entre ces deux embases, des bras allongés dont le nombre, la nature et les dimensions, associés aux conditions d'application du choc (vitesse, masse) sont telles qu'elles déterminent le programme d'absorption du choc (force programmée) par une déformation du type flambage plastique dynamique, vers l'extérieur, de telle sorte que toute l'énergie provenant du choc soit dissipée dans le programmeur, lequel permet un contrôle de ladite force programmée en la maintenant constante, à un niveau préétabli qui conditionne la survie de l'équipement et/ou de la structure.

Selon un premier mode de réalisation de l'invention, le dispositif absorbeur de choc est constitue d'un bloc sensiblement parallélépipédique rectangle comportant une fenêtre centrale et deux bras latéraux identiques qui s'étendent entre deux embases.

Pour faciliter la mise en flexion extérieure des bras, ceux-ci peuvent, à l'origine, être conformés légèrement arqués par usinage ou par pré-déformation et l'une des embases peut être conformée légèrement bombée de façon à mieux contrôler le niveau de départ de la force programmée.

Le dispositif absorbeur selon l'invention peut encore comporter, dans les embases et le prolongement des bras à chacune de leurs extrémités, des trous permettant de redresser l'écoulement plastique du matériau afin d'éviter le cisaillement des sections des extrémités desdits bras.

Selon un second mode de réalisation, le dispositif absorbeur de choc se présente sous la forme d'un bloc tubulaire comportant, entre ses deux embases, au moins deux fenêtres allongées, dessinées entre des bras de même section.

Selon une autre disposition de l'invention, le dispositif absorbeur de choc est constitué, de façon monobloc ou non, de plusieurs étages de programmation de la déformation ; chaque étage comporte des bras et des fenêtres disposés entre des embases ; les bras pouvant être excentres d'un étage à l'autre.

Selon une autre disposition de l'invention, les bras comportent des trous calibrés d'affaiblissement de façon à modifier le programme d'absorption des forces, dans chaque bras, en fonction des besoins.

D'autres caractéristiques et avantages de l'invention ressortiront de la description suivante et des dessins annexés dans lesquels :
- la figure 1 est une perspective d'un dispositif d'absorption d'énergie selon un premier mode de réalisation ;
- la figure 2 illustre la courbe caractéristique d'un absorbeur d'énergie selon l'invention ;
- la figure 3 représente le dispositif absorbeur après utilisation ;
- la figure 4 représente un second mode de réalisation de dispositif absorbeur selon l'invention ;
- la figure 5 représente une coupe selon 5-5 de la figure 4 ;
- la figure 6 représente un autre mode de réalisation d'un dispositif absorbeur selon l'invention, à plusieurs étages d'absorption ;
- la figure 7 illustre une courbe caractéristique d'un dispositif absorbeur à deux étages, chaque étage ayant des caractéristiques d'absorption différentes ;
- la figure 8 illustre le diagramme de fonctionnement d'un exemple de réalisation.

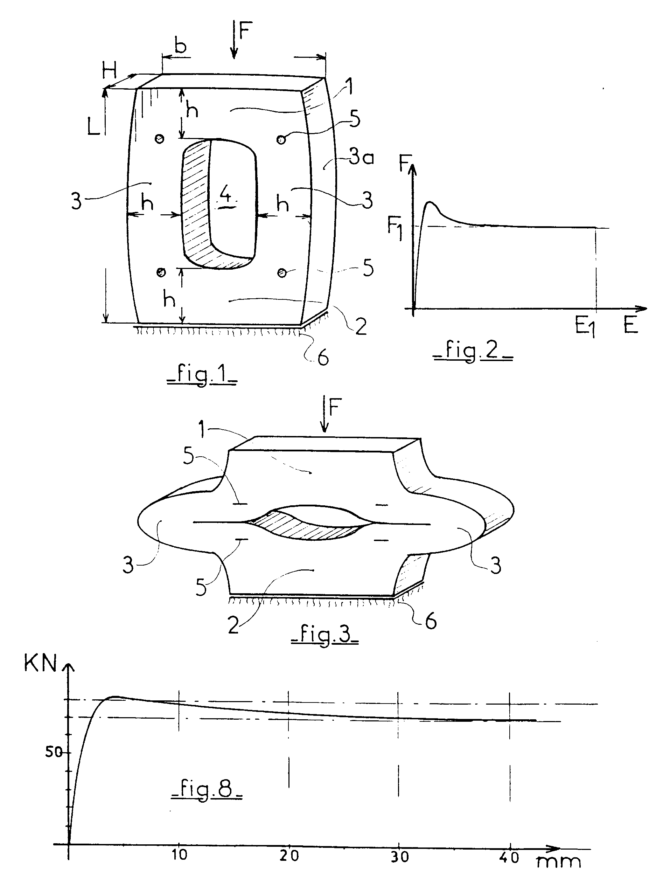

Le dispositif programmeur représenté figure 1 est en forme de bloc parallélépipédique ; il comporte deux embases 1 et 2 rectangulaires reliées par deux bras 3, de part et d'autre d'une fenêtre 4.

On remarque, dans l'exemple de la figure 1, que la fenêtre 4 a un contour légèrement elliptique ainsi que les côtés externes 3a des bras 3. L'embase l comporte une surface légèrement bombée.

Le contour elliptique du programmeur peut être obtenu directement par usinage ; il permet d'obtenir de façon sure un flambage vers l'extérieur.

Le maintien d'une force de décélération constante est assuré par le flambage plastique dynamique des bras 3 du programmeur pendant un temps inférieur au temps nécessaire pour que les deux embases du programmeur entrent en contact, figure 3.

Pour obtenir ce flambage, la géométrie du dispositif absorbeur doit remplir certaines conditions impératives.

L'élasticité des embases doit être supérieure a celle des bras. Pour obtenir une bonne stabilité générale du programmeur il a été défini que le rapport L/h doit être inférieur a un coefficient K1 que multiplie la racine carrée de h/b, où L est la longueur du progammeur, h l'épaisseur des bras 3 et des embases 1 et 2, b l'épaisseur du programmeur, K1 est un coefficient de l'ordre des π /1,2.

La stabilité du programmeur est encore étroitement liée à la dimension des bras, l'élancement de ces bras, déterminé par le rapport (L-2h)/h a une valeur, dans le cas d'un matériau à base de cuivre par exemple inférieure ou égale à cinq. Pour d'autres matériaux, à base d'aluminium, cette valeur sera inférieure à dix.

Pour obtenir un sens privilégié de la flexion des bras 3, vers l'extérieur, h doit être nettement inférieur a H.

Une autre condition pour l'efficacité du programmeur repose sur le temps critique de fermeture des fenêtres. Il faut que le temps total du choc soit inférieur au temps de fermeture des fenêtres, c'est-à-dire à la mise en contact dos deux embases 1 et 2 du programmeur.

On remarque encore sur le progammeur de la figure 1, des trous 5 disposés à chaque extrémité des bras 3 dans les embases 1 et 2 ; ces trous permettent un redressement de l'écoulement plastique du matériau aux jonctions bras-embases et évitent ainsi le cisaillement des sections des bras à ce niveau.

La figure 3 représente le programmeur de la figure 1 après écrasement. Les embases 1 et 2 sont pratiquement en contact ; les bras 3 sont totalement pliés en deux et les trous 5 ont pratiquement disparu.

Le choc est appliqué au programmeur sur son embase 1 par exemple, ledit programmeur reposant sur un bloc 6. Pour l'application du choc sur l'embase 1 on peut prévoir une pièce intercalaire qui permet la répartition sur toute la surface de ladite embase.

La figure 2 représente la courbe caractéristique de la force telle qu'elle peut être programmée dans un dispositif absorbeur selon l'invention. On a mis en abscisse l'écrasement E du dispositif absorbeur et en ordonnée la force absorbée. On remarque que la force F1 est pratiquement constante pendant l'écrasement du programmeur, jusqu à E1 qui correspond à l'écrasement total c'est-à-dire la mise en contact des embases 1 et 2. On remarque également un pic de flambage au départ qui dépend essentiellement de l'élancement de la fenêtre 4 du programmeur. Selon cet élancement le flambage peut être plastique sur la totalité des bras 3 du programmeur, ou partiellement. La valeur limite de l'élancement dépend des critères d'encombrement géométrique et des paramètres du fonctionnement du programmeur.

On peut écréter le premier pic de fonctionnement du programmeur au moyen d'une pré-déformation sous presse jusqu à un niveau ou la force de prédéformation est égale au niveau de la force souhaitée F1 de l'entrée en action du progammeur.

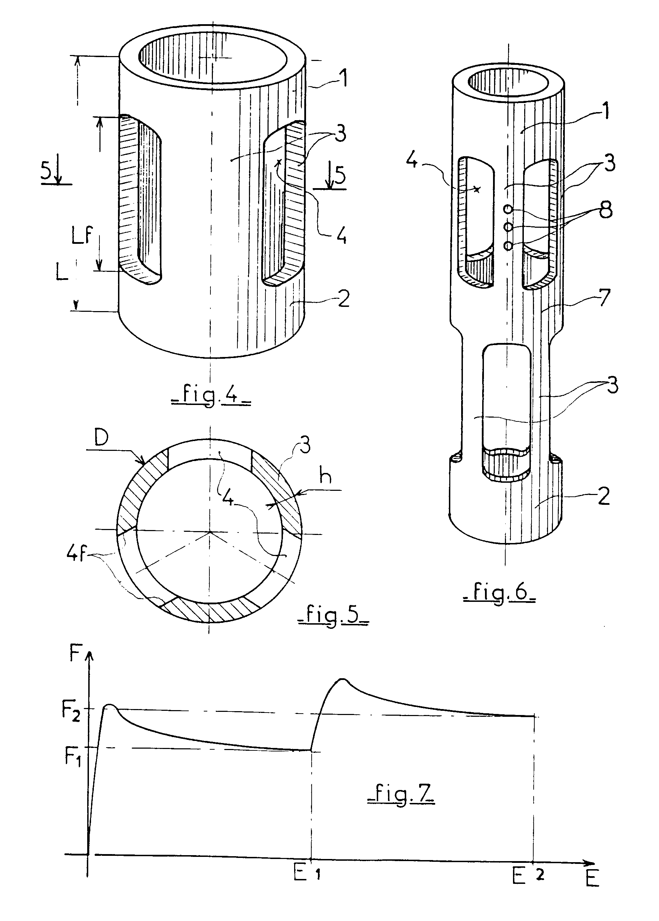

La figure 4 représente un autre mode de réalisation d'un dispositif absorbeur selon l'invention.

Ce dispositif se présente sous la forme d'un bloc tubulaire comportant des embases 1 et 2 et des bras 3 disposés entre lesdites embases.

On a représenté figure 5 une coupe transversale du dispositif programmeur montrant les sections des bras 3. Le nombre de bras peut être de trois ou quatre. L'absorption de l'énergie du choc, sous la force d'écrasement, est programmée pour être sensiblement constante pendant toute la durée de la déformation du programmeur.

La force de programmation est conditionnée par deux paramètres qui sont, d'une part, l'élancement des bras 3, ou fenêtres 4, et, d'autre part leur nombre.

Le principe de calcul du programmeur repose sur quatre critères : - un critère de stabilité c'est-à-dire que le programmeur doit avoir un fonctionnement symétrique stable avec un flambage plastique à l'extérieur de sa structure, flambage limité aux bras ; - un critère de choix du matériau, lequel doit avoir un comportement en compression dynamique adapté à la vitesse de déformation ; - un critère de force de programmation, conditionné par deux paramètres qui sont l'élancement des bras (longueur/épaisseur) et le nombre de bras; - un critère concernant l'énergie absorbée c'est-à-dire la capacité d'absorption du programmeur en force et en temps.

La force de programmation est proportionnelle au nombre de bras, à leur section et à la contrainte critique de flambage dynamique desdits bras. Cette contrainte critique de flambage dynamique est elle-même proportionnelle à la longueur des bras, leur épaisseur, à la vitesse initiale du choc et au choix du matériau.

Le nombre de bras est inférieur à cinq ; il est de trois ou quatre pour des programmeurs cylindriques.

Pour obtenir une bonne stabilité du programmeur, il faut respecter certaines conditions géométriques et en particulier prévoir un rapport Lf/h fonction du matériau, ou Lf est la longueur de la fenêtre et du bras, h son épaisseur et respecter, pour la stabilité générale, le rapport L/D qui est inférieur à trois, et où L est la longueur totale du programmeur et D son diamétre.

Le rapport Lf/h est de l'ordre de cinq pour des matériaux à base de cuivre et de l'ordre de dix pour des matériaux à base d'aluminium ou acier.

Un autre des paramètres importants dans la définition du programmeur est le temps critique de fermeture de la ou des fenêtres. Ce temps dépend des dimensions desdites fenêtres ainsi que de l'énergie cinétique en impact direct. Il faut alors, pour maintenir une force calibrée, avoir un temps critique de fermeture plus important que le temps de choc.

On remarque, figures 1 et 4, que les programmeurs sont des dispositifs destinés à être directement insérés dans la structure à protéger. Ces programmeurs sont symétriques, c'est-à-dire qu'ils comportent des embases 1 et 2 totalement identiques leur permettant d'être positionnées de façon indifférente entre ce que l'on peut appeler le marteau et l'enclume, non représenté, de la structure susceptible de recevoir un choc.

Lorsque l'énergie à dissiper dans le programmeur est supérieure à l'énergie absorbable par un programmeur déterminé, on peut multiplier le nombre de programmeurs c'est-à-dire réaliser une absorption du choc en cascade.

La figure 6 représente un programmeur a deux étages. Ce programmeur comporte deux embases 1 et 2 au niveau desquelles s'applique le choc, et une embase intermédiaire 7 qui relie les bras 3 de chacun des étages.

Les bras 3 peuvent être disposés dans le prolongement l'un de l'autre, parallèlement à l'axe du programmeur ; ils peuvent également, comme représentés figure 6, être excentrés d'un étage à l'autre.

La figure 7 illustre la courbe caractéristique d'un programmeur à deux étages comme celui représenté figure 6, avec en abscisse l'écrasement du programmeur et en ordonnée la force programmée.

On remarque un premier écrasement, jusqu'à E1, avec une force F1 pratiquement constante à l'exception du pic initial de flambage puis, a partir de E1 un deuxième pic de flambage suivi d'une force F2 sensiblement constante, supérieure à F1, qui correspond à l'écrasement du deuxième étage de programmation, jusqu'à E2. Arrivée à E2, toute l'énergie du choc doit avoir été absorbée ; l'écrasement correspondant à E2 est normalement inférieur à l'écrasement total du programmeur.

Il a été vu, dans le cas du programmeur représenté figure 1, que l'on pouvait écréter le pic de flambage si les conditions d'utilisation l'imposaient. Cette opération s'effectue par pré-déformation du programmeur, sous presse, jusqu'à un niveau où la force de pré-déformation est égale au niveau de la force souhaitée pour l'entrée en action du programmeur.

Pour obtenir des forces d'absorption programmées différentes d'un étage à l'autre du programmeur, on peut faire varier les sections des bras globalement d'un étage a l'autre ou encore effectuer un ou plusieurs trous 8 dans tous les bras d'un même étage. On obtient ainsi une atténuation contrôlée grâce au programme de chaque étage d'absorption. Le nombre d'étages est choisi en fonction de la quantité d'énergie totale maximum à absorber ; ce nombre d'étages peut être supérieur à deux.

La figure 8 illustre le fonctionnement d'un programmeur tel que représenté figures 4 et 5. Ce programmeur se présente sous la forme d'un bloc tubulaire dont la longueur L est égale à 144 mm, le diamètre externe est de 96,6 mm et le diamètre interne de 83,8 mm. Il comporte trois bras 3 et trois fenêtres 4 qui s'étendent parallèlement à l'axe du tube. Les fenêtres 4 sont centrées sur la longueur du tube ; elles ont une longueur Lf de 84 mm et une largeur de 54 mm entre deux plans parallèles 4F, figure 5 ; les quatre coins sont taillés avec un arrondi de rayon 16 mm. Les embases 1 et 2 ont une épaisseur de 30mm ; elles présentent des surfaces externes annulaires parallèles entre elles.

Ce programmeur est réalisé en acier Z2.NC.18.10 à partir d'une ébauche tubulaire d'un diamètre de 100 mm et de 10 mm d'épaisseur. La structure du programmeur ne nécessite pas d'usinages de grande précision ; le flambage s'effectue axialement sans aucun risque de déformation latérale. Le coût d'une telle structure est particulièrement réduit.

La courbe de la figure 8 illustre le fonctionnement du programmeur détaillé ci-dessus et auquel on a fait subir une prédéformation de façon a ajuster la valeur de son premier point de fonctionnement.

La prédéformation consiste en l'application d'une première force qui correspond à la force d'arrêt de la première déformation ; dans le cas présent, cette première force appliquée est de 95 KN ; la prédéformation a été stoppée à 83 KN et la déformation dL du programmeur était de 6 mm.

Le diagramme de la figure 8 avec la déformation en millimètres en abscisse et l'effort en ordonnée représente la montée rapide de l'effort a un peu plus de 80 KN puis sa stabilisation entre 80 KN et 70 KN pendant toute la déformation qui s'étend sur plus de 40 mm.

Le domaine d'application d'un tel dispositif programmeur est très vaste.

En dehors de la protection des personnes et des matériels, ce dispositif permet de réaliser des essais de produits en laboratoire qu'autrefois on ne pouvait réaliser qu'en vrai grandeur. On peut ainsi réaliser des essais sur des produits que dispensent de l'énergie (essais d'explosion) et réaliser des essais sur des produits qui reçoivent ou subissent l'énergie (essais de choc). On peut en particulier essayer des poudres d'explosifs en laboratoire. On peut également tester la tenue au choc d'équipements électriques ou électroniques embarqués sur des engins balistiques par exemple, et dont le rôle est de déclencher la mise à feu de l'engin après le choc avec la cible. Le dispositif programmeur selon l'invention permet de retarder l'application du choc à un équipement embarque notamment sur un engin balistique ou non, lui laissant le temps de commander des opérations prévues pour être consécutives au choc.

Les signes de référence insérés après les caractéristiques techniques mentionnées dans les revendications ont pour seul but de faciliter la compréhension de ces dernières, et n'en limitent aucunement la portée.

## Revendications

1. Dispositif absorbeur de choc optimalisé pour un temps de choc prédéterminé constitué d'un unique bloc de matériau rigide comportant deux embases (1, 2) semblables de réception du choc et, entre ces deux embases, de bras (3) longitudinaux,
caractérisé en ce que le nombre des bras est inférieur à cinq et en ce que, en cas de choc, le temps de fermeture de la ou de chaque fenêtre (4) définie longitudinalement entre chacun desdits bras est supérieur au temps du choc, la nature et les dimensions desdits bras (4) étant tels qu'en cas de choc, le flambage desdits bras est symétrique, extérieur, sans déviation latérale et reste dans le domaine plastique dynamique, de telle sorte que la force d'absorption soit maintenue constante à un niveau préétabli durant toute la durée de l'écrasement de l'absorbeur.

2. Dispositif absorbeur de choc selon la revendication 1, caractérisé en ce qu'il est constitué d'un bloc sensiblement parallélépipédique comportant une fenêtre centrale (4) et deux bras latéraux (3) identiques, qui s'étendent entre deux embases (1 et 2) de section rectangulaire et en ce que le rapport de la longueur du dispositif sur l'épaisseur des bras L/h est inférieur à dix.

3. Dispositif absorbeur de choc selon la revendication 2, caractérisé en ce qu'il comporte des bras (3) légèrement arqués par usinage, ou par pré-déformation de façon à contrôler le niveau de départ de ladite force d'absorption.

4. Dispositif absorbeur de choc selon l'une quelconque des revendications 2 ou 3, caractérisé en ce qu'il comporte une embase (2) plane et une embase (1) légèrement bombée pour faciliter la mise en flexion des bras (3) vers l'extérieur.

5. Dispositif absorbeur de choc selon l'une quelconque des revendications 2 à 4, caractérisé en ce qu'il comporte, dans le prolongement et à l'extrémité des bras (3), dans les embases (1) et (2), des trous (5) permettant un redressement de l'écoulement plastique du matériau de façon à éviter le cisaillement des sections aux extrémités desdits bras (3).

6. Dispositif absorbeur de choc selon la revendication 1, caractérisé en ce qu'il est constitué d'un bloc tubulaire comportant entre les deux embases (1 et 2), au moins deux bras (3) axiaux de même section, le rapport entre la longueur (L) du bloc et son diamètre extérieur (D) étant inférieur à trois.

7. Dispositif absorbeur de choc selon la revendication 6, caractérisé en ce qu'il comporte plusieurs étages constitués de bras (3) disposés entre les deux embases (1 et 2), et une embase intermédiaire (7) de séparation des étages.

8. Dispositif absorbeur de choc selon l'une quelconque des revendications 6 ou 7, caractérisé en ce qu'il comporte des bras (3) excentrés d'un étage à l'autre, c'est-à-dire non disposés dans le prolongement les uns des autres.

9. Dispositif absorbeur de choc selon l'une quelconque des revendications 6 à 8, caractérisé en ce qu'il comporte, sur les bras (3), des trous calibrés (8) d'affaiblissement desdits bras.

## Claims

1. Shock absorber device constituted by a single block of a rigid material comprising two similar shock receiving seatings (1, 2) and longitudinal arms (3) between these two seatings, wherein the number of arms is less than five and wherein, in the event of an i mpact occuring, the closing time of each window (4) defined longitudinally between each of said arms is longer than the time of the impact, the nature and dimensions of said arms (4) being such that in the event of an impact, the buckling of said arms is symmetrical, outside, without any lateral deviation and remains within the dynamic plastic range.

2. Shock absorber device according to claim 1, wherein it is constituted by an approximately parallelpiped block comprising one central window (4) and two identical lateral arms (3) extending between two seatings (1 and 2) with a rectangular section and wherein the ratio of the length of the device to the thickness of the arms L/h is less than ten.

3. Shock absorber device according to claim 2, wherein it comprises arms (3) slightly arc-shaped by machining or by pre-deformation so as to control the start level of said absorption force.

4. Shock absorber device according to claim 2 or 3, wherein it comprises one flat seating (2) and one slightly convex seating so as to facilitate the outward bending of the arms (3).

5. Shock absorber device according to any one of claims 2 to 4, wherein it comprises holes (5) in the projection and at the extremity of the arms (3) in the seatings (1) and (2), said holes allowing for a straightening of the plastic flow of the material so as to avoid the shearing of the sections at the extremities of said arms (3).

6. Shock absorber device according to claim 1, wherein it is constituted by a tubular block comprising between the two seatings (1 and 2) at least two axial arms (3) with the same section, the ratio between the length (L) of the block and its outer diameter (D) being less than three.

7. Shock absorber device according to claim 6, wherein it comprises several stages constituted by arms (3) disposed between the two seatings (1 and 2) and one intermediate seating (7) for separating the stages.

8. Shock absorber device according to claim 6 or 7, wherein it comprises arms (3) moved out of centre from one stage to another, that is not disposed in the projection of each other.

9. Shock absorber device according to any one of claims 6 to 8, wherein it comprises calibrated holes (8) on the arms (3) for weakening of said arms.

## Patentansprüche

1. Stoßdämpfervorrichtung, optimiert für eine vorgegebene Stoßdauer, bestehend aus einem einzigen starren Materialblock mit zwei Sockeln (1, 2) mit gleichartiger Stoßdämfung und Seitenarmen (3), dadurch gekennzeichnet, daß die Zahl der Seitenarme weniger als fünf beträgt und beim Auftreffen eines Stoßes die Zeit für das Schließen des bzw. der in Längsrichtung zwischen den einzelnen Seitenarmen gebildeten Fenster (4) länger als die Zeit des Stoßes dauert, wobei die Art und Abmessungen der o.a. Seitenarme (3) derart beschaffen sind, daß bei einem Stoß die Biegung der Seitenarme symmetrisch, nach außen, ohne seitliche Verschiebung erfolgt und im Bereich der dynamischen plastischen Verformung bleibt, sodaß die Absorptionskraft wahrend der gesamten Dauer des Zusammendrückens des Stoßdämpfers auf einem vorgegebenen Niveau konstant gehalten wird.

2. Stoßdampfervorrichtung nach Patentanspruch 1, dadurch gekennzeichnet, daß sie aus einem weitgehend quaderförmigen Block mit einem Fenster (4) in der Mitte und zwei gleichen Seitenarmen (3) besteht, die zwischen den beiden Sockeln (1) und (2) mit rechtwinkligem Querschnitt erstrecken, sowie dadurch, daS der Wert für das Verhältnis zwischen Lange der Vorrichtung und Stärke der Arme L/h weniger als zehn beträgt.

3. Stoßdämpfervorrichtung nach Patentanspruch 2, dadurch gekennzeichnet, daß sie leicht gewölbt gearbeitete oder vorverformte Seitenarme (3) besitzt, um das Ausgangsniveau der zu dampfenden Stoßkraft besser zu kontrollieren.

4. Stoßdämpfervorrichtung nach Patentanspruch 2 oder 3, dadurch gekennzeichnet, daß sie einen flachen Sockel (2) und einen leicht gewölbten Sockel (1) besitzt, um das Biegen der Seitenarme (3) nach außen zu begünstigen.

5. Stoßdämpfervorrichtung nach Patentanspruch 2 bis 4 dadurch gekennzeichnet, daß sie in Verlagerung der Seitenarme (3) in den Sockeln (1) und (2) Löcher (5) besitzt, um ein wiederaufrichten des plastischen Verfließens des Materials zu ermöglichen und somit ein Abscheren der Abschnitte an den Enden der seitenarme (3) zu verhindern.

6. Stoßdampfervorrichtung nach Patentanspruch 1, dadurch gekennzeichnet, daß sie aus einem rohrförmigen Block besteht, der zwischen den beiden Sockeln (1) und (2) mindestens zwei axiale Seitenarme (3) gleichen Querschnitts besitzt, wobei der Wert für das Verhältnis zwischen Länge (L) des Blocks und dessen Außendurchmesser (D) weniger als 3 beträgt.

7. Stoßdämpfervorrichtung nach Patentanspruch 6, dadurch gekennzeichnet, daß sie aus mehreren Stufen mit Seitenarmen (3) zwischen den beiden Sockeln (1) und (2) sowie jeweils einem zwischensockel (7) zwischen den einzelnen Stufen besteht.

8. Stoßdämpfervorrichtung nach Patentanspruch 6 oder 7 dadurch gekennzeichnet, daS sie Seitenarme (3) besitzt, die von Stufe zu Stufe exzentrisch zueinander, das heißt nicht in Verlängerung voneinander verlaufen

9. Stoßdämpfervorrichtung nach Patentanspruch 6 bis 8, dadurch gekennzeichnet, daß sie an den Seitenarmen (3) kalibrierte Löcher (8) zum Abschwachen der seitenarme besitzt.
